# NEUE EUROPÄISCHE PATENTSCHRIFT

(11) **EP 0 490 169 B2**
(45) Veröffentlichungstag und Bekanntmachung des Hinweises auf die Entscheidung über den Einspruch: **08.04.1998**
(45) Hinweis auf die Patenterteilung: 22.02.1995
(21) Anmeldenummer: 91120240.6
(22) Anmeldetag: 27.11.1991
(51) Int. Cl.: B01D 46/52

(54) **Filtereinsatz für insbesondere Gasfilter**
Filter cartridge especially for gas filters
Cartouche filtrante en particulier pour des filtres à gaz

(30) Priorität: 08.12.1990 DE 4039287
(43) Veröffentlichungstag der Anmeldung: 17.06.1992
(73) Patentinhaber: KNECHT FILTERWERKE GMBH, 70376 Stuttgart (DE)
(72) Erfinder: Schneider, Horst, W-7050 Waiblingen 8 (DE); Widmann, Sigbert, W-7322 Donzdorf (DE); Baumann, Peter, W-7000 Stuttgart 80 (DE)
(74) Vertreter: Patentanwalts-Partnerschaft Rotermund + Pfusch

(56) Entgegenhaltungen:
- EP-A- 438 699
- DE-A- 2 137 309
- DE-A- 3 439 255
- DE-U- 6 946 168
- DE-U- 6 950 404
- GB-A- 1 036 322
- PATENT ABSTRACTS OF JAPAN, Band 10, Nr. 219 (C-363)(2275), 31. Juli 1986; & JP-A-6157217 (HITACHI LTD) 24.03.1986

## Beschreibung

Die Erfindung betrifft einen Filtereinsatz für insbesondere Gasfilter nach dem Oberbegriff des Patentanspruchs 1.

Bei einem derartigen Filtereinsatz sollen die dichtenden Ränder möglichst einfach und kostengünstig herstellbar ausgebildet werden. Insbesondere sollen sämtliche Teile des Filtereinsatzes aus dem gleichen oder zumindest einem zusammensetzungsmäßig gleichartigen Material bestehen können, um einfach entsorgt oder zu dem Basismaterial wieder aufbereitet werden zu können.

Weiterhin soll der Filtereinsatz mit an dessen Rand befestigten Dichtstreifen zum einen absolut dicht und zum anderen lagefixiert in ein Filtergehäuse eingesetzt werden.

Das Filter nach der DE-U 69 50 404 zeigt ein topfförmiges Filter mit einem V-förmigen Querschnitt. Ein solches Filter ist nicht mit einem plattenförmigen Filtereinsatz vergleichbar. Derartige topfförmige Filter, die aus einer V-förmig gelegten Filterbahn hergestellt werden, brauchen an ihrer offenen Frontseite einen umlaufenden Rahmen sowie flache Abdeckteile zum Verschließen der offenen V-Seitenbereiche.

Bei einem plattenförmigen Filtereinsatz ist dies dagegen nicht notwendig. Die Randabdichtung wird bei plattenförmigen Filtereinsätzen, die senkrecht zu der Plattenebene in ein Gehäuse dicht eingespannt werden, üblicherweise durch einen an den Umfang angegossenen bzw. angeschäumten elastischen Kunststoffrand erzeugt. Eine andere Dichtungsart besteht darin, den Rand zu einem flachen dicht einspannbaren Band zu verformen, wie es in der DE-OS 21 37 309 gezeigt ist.

Aus DE 3439255 A1 ist weiterhin ein kastenförmiger Filtereinsatz mit angeklebten Dichtungsstreifen an dessen Rändern bekannt, mit denen dieser Einsatz dicht in ein Filtergehäuse einsetzbar sein soll. Die als Dichtlippen wirkenden Dichtungsstreifen sind gegenüber den jeweils zugeordneten Seitenflächen des Filtereinsatzes in einem spitzen Winkel geneigt. Die Dichtwirkung zwischen dem in ein Filtergehäuse eingesetzten Filtereinsatz und dem Filtergehäuse wird dadurch erreicht, daß die gewinkelten Dichtungsstreifen dichtlippenartig an Innenwandbereichen des den Filtereinsatz aufnehmenden Filtergehäuses selbstspannend anliegen. Hierdurch ist weder eine sichere Dichtung noch eine Lagefixierung des Filtereinsatzes erreichbar.

Lösbar ist das oben genannte Problem mit einem Filtereinsatz nach den kennzeichnenden Merkmalen des Patentanspruchs 1.

Zweckmäßige Ausgestaltungen sind Gegenstand der Unteransprüche.

Soweit in der nicht vorveröffentlichten älteren Anmeldung EP 0436639 A ein Verschweißen von Filtermaterialien bei Plattenfiltern beschrieben ist, betrifft dies nicht einen Filtereinsatz mit den kennzeichnenden Merkmalen des Patentanspruchs 1.

Ein Ausführungsbeispiel ist in der Zeichnung dargestellt. Es zeigen
- Fig. 1: eine perspektivische Ansicht eines quer durchschnittenen Filtereinsatzes mit flach aufgeklebten Dichtstreifen
- Fig. 2: einen Ausschnitt aus einem Querschnitt eines Filtereinsatzes mit einem stufenförmig ausgebildeten Dichtrahmen bei in einem Filtergehäuse eingebautem Zustand
- Fig. 3: einen Querschnitt durch einen in ein Gehäuse eingesetzten Filtereinsatz mit Abstützeinrichtungen in dem Filtergehäuse
- Fig. 4: einen Ausschnitt aus Fig. 3 mit einer alternativen Art der Dichtung zwischen Filtereinsatz und Filtergehäuse
- Fig. 5: eine perspektivische Ansicht eines Filtereinsatzes mit einem speziell ausgestalteten Rahmen
Bei dem Filtereinsat nach den Fig. 1 ist Filterbahnenmaterial 1 zick-zack-förmig zu einem plattenförmigen Filtereinsatz gefaltet.

Die einzelnen Falten sind an deren Stirnkanten derart miteinander verklebt, daß sich von in Richtung des Pfeiles A durchströmbare seitlich geschlossene Falten bilden. Die Verklebung erfolgt durch einen linienförmig aufgetragenen Hotmelt-Kleber 2. Die Hotmelt-Klebelinie 2 dient darüber hinaus dazu, im Bereich der Stirnkanten der einzelnen Falten einen seitlich über den Filtereinsatz jeweils hinausragenden Dichtstreifen 3 aufzukleben. Ebenfalls durch einen Hotmelt-Kleber sind an den in Faltrichtung des Bahnenmaterials liegenden Enden jeweils ein Dichtstreifen 4 aufgeklebt, wobei die Dichtstreifen 3 und 4 an den Ecken des Filtereinsatzes überlappen und dort miteinander verklebt sind. Die Dichtstreifen können steif sein oder aus einem in sich elastischen Material bestehen.

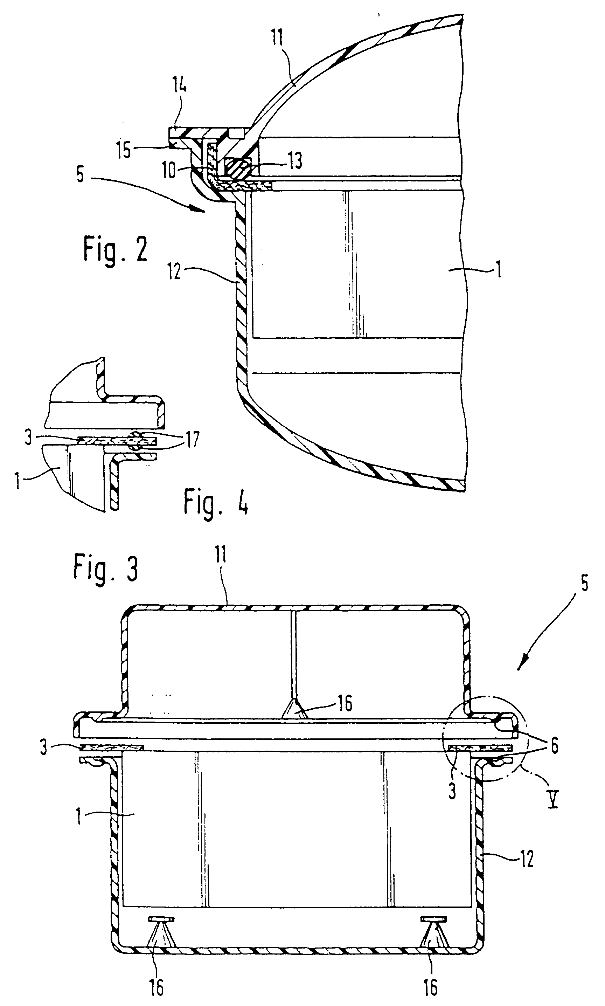

Wie ein Filtereinsatz mit Dichtstreifen 3, 4 in ein Filtergehäuse 5 eingesetzt sein kann, zeigt Fig. 3. Dort sind die Ränder des Filtergehäuses mit einer Art Nut- und Federgestalt ausgebildet, so daß die Dichtstreifen 3, 4 dicht zwischen den Nut- und Federteilen 6 eingespannt werden können.

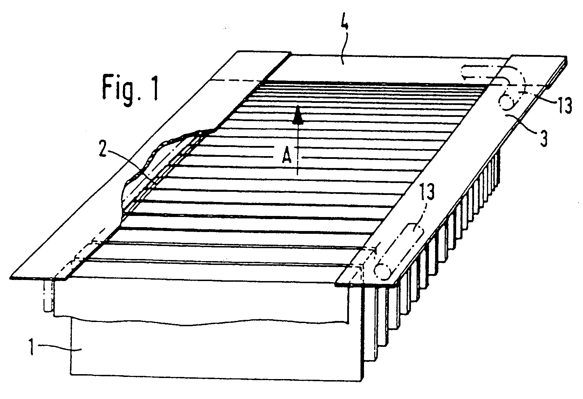

Zusätzlich zu den Dichtstreifen 3 können an den Stirnkanten der Falten zur Versteifung des Filtereinsatzes noch weitere Streifen aufgebracht sein, wobei diese in Streifenebene bevorzugt steif ausgebildet sind. In der Fig. 1 sind diese zusätzlichen Streifen strichpunktiert angedeutet.

Das Filterbahnenmaterial 1 und das Material der Streifen 3 und 4 können aus dem gleichen Material, das aufschmelzbar sein kann, bestehen. Grundsätzlich reicht es bereits aus, wenn wenigstens das den Rahmen bildende Streifenmaterial aufschmelzbar ist. Die Verbindung der Streifen 3 an den einzelnen Falten kann durch Ultraschallschweißen erzeugt werden. Derartige Filtereinsätze sind leicht und problemlos entsorgbar.

Bei einem plattenförmigen Filtereinsatz aus zick-zack-förmig gefaltetem Bahnenmaterial kann an den Rändern auch ein fertiger rundum geschlossener Rahmen 10 aufgebracht sein und zwar durch Aufkleben oder Aufschweißen. Der Rahmen kann eine Winkelform haben und so nach außen mit einem freien Winkel aus der Plattenebene abstehen, daß die Filtereinsätze zu Lager- und Montagezwecken in diesen Rahmen 10 gegenseitig übereinander ausgerichtet stapelbar sind.

Ist das an den Rändern des Filtereinsatzes vorgesehene Rahmenmaterial selbst nicht ausreichend elastisch, um als Dichtung innerhalb eines geteilten Filtergehäuses dienen zu können, ist in dem Filtergehäuse ein elastisches Dichtmaterial vorzusehen. Dieses kann auch einseitig oder beidseitig auf den Rahmenteilen 3, 4 aufgetragen sein, wie in Fig. 4 mit dem dortigen Dichtmaterial 17 gezeigt.

Bei dem in Fig. 2 dargestellten Filtergehäuse mit einem Oberteil 11 und einem Unterteil 12 ist in dem Oberteil 11 als elastisches Dichtmaterial ein Dichtring 13 eingelegt. Über diesen Dichtring 13 wird der Rahmen 10 gegenüber dem Rand des Gehäuseoberteiles 11 gedichtet, wobei der Rahmen 10 unter dem von dem Dichtring 13 aufgebrachten elastischen Druck auf einer Gegenfläche des Gehäuseunterteiles 12 aufliegt. Die elastische Verspannung des Dichtringes wird durch Anschläge 14 und 15 an den beiden Filtergehäuseteilen 11 und 12, die bei geschlossenem Filtergehäuse fest zur Anlage kommen, bestimmt.

In Fig. 1 ist die Lage eines in dem Filtergehäuse möglicherweise vorgesehenen elastischen Dichtringes 13 in bezug auf die Dichtstreifen 3, 4 strichpunktiert angedeutet.

Zusätzlich zu der Fixierung des Filtereinsatzes über die Randabdichtungen 3, 4; 10 kann ein Filtereinsatz auch noch durch weitere in den Gehäuseteilen 11, 12 angebrachte Stützlager 16 lagefixiert sein.

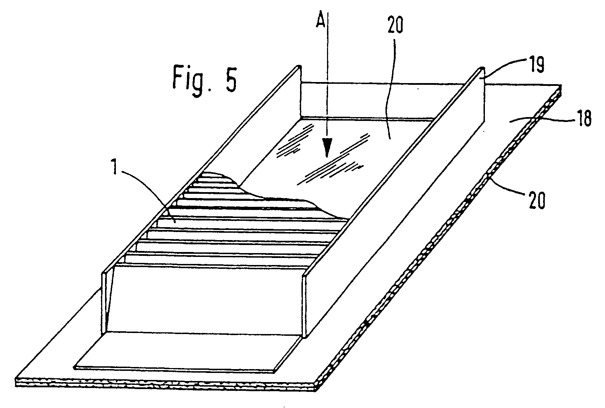

Bei der Ausführung eines Filtereinsatzes nach Fig. 5 besteht der Rahmen 18 einteilig aus einem aufschmelzbaren Polyester-Nadelfilz. Hergestellt ist dieser Rahmen 18 dadurch, daß die mittlere Öffnung zur Aufnahme des gefalteten Bahnenmaterials aus einem durchgehenden Nadelfilz ausgestanzt ist, wobei gleichzeitig die Laschen 19, mit denen die Faltenstirnkanten abgedichtet werden, ausgeschnitten werden.

Abströmseitig ist der Filtereinsatz mit einem Filtervlies 20 abgedeckt, wobei dieses Vlies mit dem Rahmenmaterial durch Ultraschall dicht verschweißt ist.

## Patentansprüche

1. Plattenförmiger Filtereinsatz für insbesondere ein Gasfilter, der aus zick-zack-förmig gefaltetem Bahnenmaterial mit an den Stirnkanten verschlossenen Filterfalten besteht und an seinen Rändern zur Abtrennung eines stromab liegenden Reinraumes in ein Gehäuse (5) des Gasfilters einsetzbar ist, wobei an den zu dichtenden Rändern entweder ein vorgefertigter streifenförmiger Rahmen (10;18) oder einzelne zu einem Rahmen zusammenfügbare vorgefertigte streifenförmige Rahmenteile (3,4) befestigt sind und wobei der Rahmen (10; 18,3,4) den plattenförmigen Filtereinsatz überragt, um mit diesem überragendem Bereich dicht in das Gehäuse (5) des Gasfilters einspannbar zu sein,
**dadurch gekennzeichnet,**
daß die Rahmenteile (10; 18,3,4) an den von den Faltenstirnkanten gebildeten Seitenbereichen des Filtereinsatzes auf die Faltenrücken aufgeklebt oder geschweißt sind.

2. Filtereinsatz nach Anspruch 1,
dadurch **gekennzeichnet**,
daß der Rahmen (10; 3, 4) und die Filterbahn aus einem gleichen oder zumindest zusammensetzungsmäßig gleichartigen Material bestehen.

3. Filtereinsatz nach Anspruch 1,
dadurch **gekennzeichnet**
daß der Rahmen (3,4;10;18) aus schmelzbarem Material besteht.

4. Filtereinsatz nach Anspruch 3,
dadurch **gekennzeichnet**
daß das schmelzbare Material ultraschallverschweißbar und auf diese Weise mit dem gefalteten Bahnenmaterial (1) verbindbar ist.

5. Filtereinsatz nach einem der vorhergehenden Ansprüche, bei dem die Rahmenteile aufgeklebt sind,
**dadurch gekennzeichnet,**
daß der Kleber ein Schmelzkleber (Hotmelt-Kleber) ist.

6. Filtereinsatz nach einem der vorhergehenden Ansprüche,
dadurch **gekennzeichnet**,
daß die Falten durch eine auf der Filterbahn fortlaufende Linie aus Schmelzkleber (2) (Hotmelt-Kleber) zu seitlich geschlossenen Taschen verklebt sind und daß der Rahmen (10; 3, 4;) im Bereich der Faltenrücken zumindest über diese Klebelinie mit der Filterbahn verbunden ist.

7. Filtereinsatz nach einem der vorhergehenden Ansprüche,
dadurch **gekennzeichnet**,
daß die Rahmenteile flache an den Ecken des Filtereinsatzes miteinander verbundene einfache, biegsame, Streifen (3, 4;) sind, die den Filtereinsatz zur dichten Einspannung in einem Filtergehäuse (5) überragen.

8. Filtereinsatz nach einem der vorhergehenden Ansprüche,
dadurch **gekennzeichnet**,
daß die in Faltrichtung des Bahnenmaterials (1) liegenden Endbereiche des Bahnenmaterials als überragende Einspannstreifen (4,) ausgebildet sind.

9. Filtereinsatz nach einem der vorhergehenden Ansprüche,
dadurch **gekennzeichnet**
daß der Rahmen (18) aus Folienmaterial gefertigt ist, in das die das gefaltete Bahnenmaterial (1) aufnehmende Öffnung aus dem Folienmaterial herausgearbeitet ist, wobei das die Faltenstirnkanten abdeckende Rahmenmaterial gegenüber den übrigen Rahmenbereichen laschenförmig (Laschen 19) klappbar ist.

10. Filtereinsatz nach einem der vorhergehenden Ansprüche,
dadurch **gekennzeichnet**,
daß der Rahmen (10) im Querschnitt ein Stufenprofil aufweist, durch das mehrere Filtereinsätze übereinander mit seitlicher Führung stapelbar sind.

11. Filtereinsatz nach einem der vorhergehenden Ansprüche,
dadurch **gekennzeichnet**,
daß der Rahmen (10; 3, 4; 18) in einem Filtergehäuse (5) gegen dort angebrachte elastische Dichtmittel (13) verspannbar ist, die als Dichtmittel (17) ein- oder beidseitig fest mit dem Rahmen (10; 3, 4; 18)) verbunden sein können.

12. Filtereinsatz nach einem der vorhergehenden Ansprüche,
dadurch **gekennzeichnet**,
daß der Filtereinsatz noch außerhalb des Rahmens zusätzlich durch Stützlager (16) in dem Filtergehäuse (5) abgestützt ist.

13. Filtereinsatz nach einem der vorhergehenden Ansprüche,
dadurch **gekennzeichnet**,
daß die seitlich abstehenden Teile des Rahmens (3,4,10;18) auf der stromab liegenden Seite des Filtereinsatzes angeordnet sind und daß der Filtereinsatz auf seiner stromab liegenden Seite durch ein mit dem Rahmen verbundenes bahnenförmiges Filtermaterial (20) abgedeckt ist.

14. Filtereinsatz nach Anspruch 14,
dadurch **gekennzeichnet**,
daß das bahnenförmige Filtermaterial (20) ein Filtervlies ist.

## Claims

1. Plate-shaped filter insert especially for a gas filter, which consists of web material folded in a zigzag-shaped manner and having filter pleats closed at the end edges and which can be inserted at its margins into a housing (5) of the gas filter for the separation of a downstream clean space, there being fastened to the margins to be sealed either a prefabricated strip-shaped frame (10; 18) or individual prefabricated strip-shaped frame parts (3, 4) which may be assembled to form a frame, and the frame (10; 18, 3, 4) projecting beyond the plate-shaped filter insert, so as to be capable of being sealingly clamped with this projecting region into the housing (5) of the gas filter, characterized in that the frame parts (10; 18, 3, 4) are glued or welded to the pleat spines on the side regions of the filter insert which are formed by the pleat end edges.

2. Filter insert according to Claim 1, characterized in that the frame (10; 3, 4) and the filter web consist of an identical material or a material which is similar at least in composition.

3. Filter insert according to Claim 1, characterized in that the frame (3, 4; 10; 18) consists of meltable material.

4. Filter insert according to Claim 3, characterized in that the meltable material is ultrasonically weldable and can thereby be connected to the pleated web material (1).

5. Filter insert according to one of the preceding claims, in which the frame parts are glued on, characterized in that the adhesive is a hot-melt adhesive.

6. Filter insert according to one of the preceding claims, characterized in that the pleats are glued together, to form laterally closed pockets, by means of a line of hot-melt adhesive (2) extending continuously on the filter web, and in that the frame (10; 3, 4) is connected to the filter web, at least via this line of adhesive, in the region of the pleat spines.

7. Filter insert according to one of the preceding claims, characterized in that the frame parts are simple flat flexible strips (3, 4) which are connected to one another at the corners of the filter insert and which project beyond the filter insert for sealing clamping in a filter housing (5).

8. Filter insert according to one of the preceding claims, characterized in that the end regions of the web material which are located in the pleating direction of the web material (1) are designed as projecting clamping strips (4).

9. Filter insert according to one of the preceding claims, characterized in that the frame (18) is manufactured from sheet material, in which the orifice receiving the pleated web material (1) is worked out of the sheet material, and the frame material covering the pleat end edges can be folded in a tab-like manner (tabs 19) relative to the remaining frame regions.

10. Filter insert according to one of the preceding claims, characterized in that the frame (10) has, in cross-section, a step profile, by means of which a plurality of filter inserts can be stacked one above the other with lateral guidance.

11. Filter insert according to one of the preceding claims, characterized in that the frame (10; 3, 4; 18) can be clamped in a filter housing (5) against elastic sealing means (13) which are attached there and which can be fixedly connected as sealing means (17) to the frame (10; 3, 4; 18) on one side or both sides.

12. Filter insert according to one of the preceding claims, characterized in that the filter insert is also additionally supported outside the frame in the filter housing (5) by means of supporting bearings (16).

13. Filter insert according to one of the preceding claims, characterized in that the laterally projecting parts of the frame (3, 4, 10; 18) are arranged on the downstream side of the filter insert, and in that the filter insert is covered on its downstream side by a web-like filter material (20) connected to the frame.

14. Filter insert according to Claim 13, characterized in that the web-like filter material (20) is a filter fleece.

## Revendications

1. Cartouche filtrante en forme de plaque, en particulier pour un filtre à gaz, qui est constituée d'un matériau en bande pliée en zigzag, avec des plis de filtre fermés aux arêtes frontales, et qui peut être insérée sur ses bords dans un carter (5) du filtre à gaz pour la séparation d'une salle blanche située en aval, en sorte que sur les bords à rendre étanches est (sont) fixé(s) ou bien un cadre (10 ; 18) préfabriqué en forme de bandes, ou bien des éléments de cadre (3, 4) préfabriqués en forme de bandes, et que le cadre (10 ; 18, 3, 4) fait saillie de la cartouche filtrante en forme de plaque, pour permettre avec cette région en saillie une insertion étanche dans le carter (5) du filtre à gaz,
caractérisée en ce que les éléments de cadre (10 ; 18, 3, 4) sont collés ou soudés avec les régions latérales de la cartouche filtrante sur les dos des plis.

2. Cartouche filtrante selon la revendication 1, caractérisée en ce que le cadre (10 ; 3, 4) et la bande filtrante sont constituées de matériaux présentant des compositions identiques ou du moins similaires.

3. Cartouche filtrante selon la revendication 1, caractérisée en ce que le cadre (3, 4 ; 10 ; 18) est constitué d'un matériau fusible.

4. Cartouche filtrante selon la revendication 3, caractérisée en ce que le matériau fusible peut être soudé par ultrasons et réuni ainsi avec le matériau en bande (1) plié.

5. Cartouche filtrante selon l'une des revendications précédentes, caractérisée en ce que la colle est une colle à fusion (colle thermofusible).

6. Cartouche filtrante selon l'une des revendications précédentes, caractérisée en ce que les plis sont collés sur une ligne continue de colle à fusion (2) (colle thermofusible) de façon à former des poches fermées latéralement, et que le cadre (10 ; 3, 4 ; 15) est réuni à la bande filtrante, dans la région des dos des plis, par au moins cette ligne de colle.

7. Cartouche filtrante selon l'une des revendications précédentes, caractérisée en ce que les éléments de cadre sont constitués par des simples bandes (3, 4 ; 15) plates et souples qui sont rattachées les unes aux autres dans les coins de la cartouche filtrante et dépassent de celle-ci pour permettre une insertion étanche dans un carter de filtre (5).

8. Cartouche filtrante selon l'une des revendications précédentes, caractérisée en ce que les sections terminales du matériau en bande orientées dans la direction de pliage dudit matériau en bande (1) sont conformées en bandes d'insertion (4, 15) en saillie.

9. Cartouche filtrante selon l'une des revendications précédentes, caractérisée en ce que le cadre (18) est constitué d'un matériau en feuille dans lequel est dégagée l'ouverture recevant le matériau en bande (1) plié, le matériau de cadre recouvrant les arêtes frontales des plis pouvant être replié à la manière de pattes (pattes 19) par rapport aux autres sections du cadre.

10. Cartouche filtrante selon l'une des revendications précédentes, caractérisée en ce que le cadre (10) présente, en section transversale, un profil étagé qui permet d'empiler plusieurs cartouches filtrantes les unes sur les autres, avec guidage latéral.

11. Cartouche filtrante selon l'une des revendications précédentes, caractérisée en ce que le cadre (10 ; 3, 4 ; 15 ; 18) peut être bloqué dans un carter de filtre (5) contre des moyens d'étanchéité (13) élastiques prévu dans ce dernier qui, en tant que moyens d'étanchéité (17) peuvent être solidarisés d'un côté ou des deux côtés avec le cadre (10 ; 6, 4 ; 15 ; 18).

12. Cartouche filtrante selon l'une des revendications précédentes, caractérisée en ce que la cartouche filtrante est encore soutenue à l'extérieur du cadre par des supports (16) supplémentaires prévus dans le carter de filtre (5).

13. Cartouche filtrante selon l'une des revendications précédentes, caractérisée en ce que les parties du cadre (3, 4 ; 15 ; 10 ; 18) en saillie latérale sont disposées du côté aval de la cartouche filtrante, et que la cartouche filtrante est recouverte, sur son côté aval, par un matériau filtrant (20) en forme de bande rattaché au cadre.

14. Cartouche filtrante selon la revendication 13, caractérisée en ce que le matériau filtrant (20) en forme de bande est une nappe filtrante.
